# EUROPEAN PATENT APPLICATION

(11) **EP 2 375 767 A1**
(43) Date of publication of application: **12.10.2011**
(21) Application number: 09830218.5
(22) Date of filing: 04.12.2009
(51) Int. Cl.: H04N 13/04, G02B 27/22, G09G 5/00, G09G 5/36

(54) **STEREOSCOPIC VIDEO PLAYER, STEREOSCOPIC VIDEO PLAYBACK SYSTEM, STEREOSCOPIC VIDEO PLAYBACK METHOD, AND SEMICONDUCTOR DEVICE FOR STEREOSCOPIC VIDEO PLAYBACK**

(30) Priority: 05.12.2008 JP 2008310642
(71) Applicant: Panasonic Corporation, Kadoma-shi Osaka 571-8501 (JP)
(72) Inventor: KUNO, Yoshiki, Osaka-shi, Osaka 540-6207 (JP)
(74) Representative: Unland, Jochen Hermann
(86) International application number: PCT/JP2009/006630
(87) International publication number: WO 2010/064448

(57) **Abstract**

A three dimensional video reproduction apparatus includes a video input unit operable to input a signal for displaying a 2D image or a 3D image; a separation unit operable to divide an image indicated by the signal inputted in the video input unit into two images; a difference extraction unit operable to extract a difference or correlation between the two divided images; a determination unit operable to determine whether the signal inputted in the video input unit is a signal for displaying a 3D image or a signal for displaying a 2D image, based on the output of the difference extraction unit; and a 2D/3D changeover unit operable to change over an output mode for outputting an image between a 2D mode for displaying a 2D image and a 3D mode for displaying a 3D image, based on the result of the determination by the determination unit.

## Description

### Technical Field

The technical field is a technique relating to a three dimensional video reproduction apparatus, a three dimensional video reproduction system, a three dimensional video reproduction method and a semiconductor device for three dimensional video reproduction which enable three dimensional viewing using two video signals having a parallax between left and right eyes, such as three dimensional televisions.

### Background Art

In recent years, there have been rapidly developed techniques for 3D televisions capable of displaying stereoscopic images (three dimensional images (3D images)). As backgrounds thereof, there are hits of 3D movies screened in movie theaters and experimental implementation of 3D broadcasts in some broadcasting stations through BS digital broadcasting. Further, some makers have already commercialized 3D television apparatuses, thereby getting ready for viewing of 3D images in ordinary households.

Generally, there are mainly two types of methods for viewing 3D images. These are methods for viewing with unaided eyes and methods for viewing by wearing dedicated glasses. For realizing a method for viewing with unaided eyes, there are a parallax barrier method and a lenticular method which are disclosed in JP-A-9-43540 (Patent Document 1) and JP-A-9-318911 (Patent Document 2), for example. Such a parallax barrier method has the problem that the position at which viewing is performed is limited and, also, the barrier obstructs the view. Further, such a lenticular method has the problem that the resolution is degraded and the lens obstructs the view.

Further, as methods for viewing by wearing dedicated glasses, there have been known, for example, a method for viewing by attaching a specific film to a television and wearing polarized glasses as disclosed in Japanese Patent JP-B-3796414 (Patent Document 3), and also a method for viewing by wearing liquid-crystal shutter glasses as disclosed in JP-A-6-254046 (Patent Document 4) and JP-A-7-336729 (Patent Document 5).

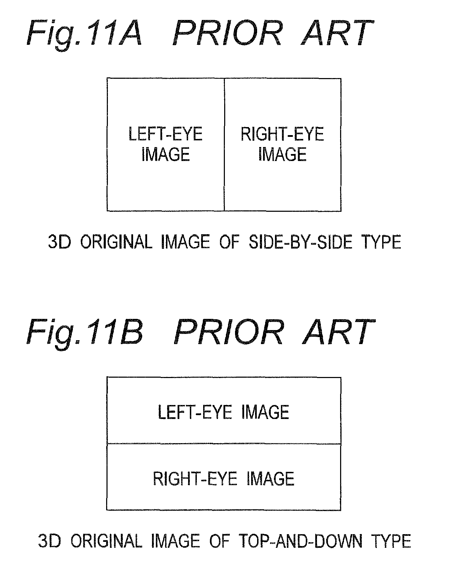

Further, in Japan, 3D broadcasting has been experimentally implemented by transmitting 3D video signals in certain time slots for BS digital channels. As the 3D broadcasting scheme, a side-by-side scheme is employed. The side-by-side scheme is a method for decreasing the number of pixels of left-eye images and right-eye images which have originally had a numbed of pixels of 1920*1080 to half thereof, namely to 960*1080, then placing the left-eye images and the right-eye images which have been decreased in number of pixels, in the left and right sides, further combining them to each other and transmitting each of them as a single video image, as illustrated in Fig. 11A.

Further, as the 3D broadcasting scheme, there is a top-and-bottom method for placing left-eye images and right-eye images in the upper and lower sides as illustrated in Fig. 11B. It is expected that, in real 3D broadcasts, such a side-by-side method or a top-and-bottom method is employed. These methods provide the advantages that the contents of broadcasts can be viewed even without glasses and without being doubly blurred even when they are viewed on existing 2D televisions, thereby resulting in a relatively low possibility that users mistakenly determine that there are failures in the televisions.

On the other hand, as reproduction modes for conventional 3D television apparatuses, there are a 2D mode for displaying 2D images (two dimensional images) and a 3d mode for displaying 3D images. Conventionally, the changeover between the 2D mode and the 3D mode has been performed by using a switch and the like. If television apparatuses compatible with 3D broadcasting receive a 3D broadcast of such a side-by-side type, a user views video images as illustrated in Fig. 11A, at first. In such a case, the user can change over the setting of the television to the 3D mode and can wear glasses, if such glasses are necessary, to view the 3D broadcast as 3D images. After the 3D broadcast ends and a changeover to a 2D broadcast occurs, he or she can take off the glasses if he or she has worn the glasses and can change over the setting of the television to the 2D mode, to enjoy the 2D broadcast (the broadcast for transmitting 2D video signals) with 2D images.

### Prior Art Document

### Patent Document

Patent Document 1: JP-A-9-43540
Patent Document 2: JP-A-9-318911
Patent Document 3: JP-B-3796414
Patent Document 4: JP-A-6-254046
Patent Document 5: JP-A-7-336729

### Summary of Invention

### Problems to be Solved by the Invention

However, such conventional 3D television apparatuses have problems as follows. Namely, in cases where the type of broadcasting is changed over from 2D broadcasting to 3D broadcasting, users recognize the changeover by viewing images of a side-by-side type or a top-and-bottom type which are being displayed on 3D television apparatuses and are required to manually cause a changeover to the setting for 3D display. Namely, there is the burden of the changeover.

Namely, in cases where the type of broadcasting is changed over from 3D broadcasting to 2D broadcasting, until users restore the setting of the 3D television apparatuses to the 2D mode, the settings of the three dimensional video display apparatuses are maintained at the 3D mode and, therefore, images are outputted to the 3D television apparatuses in such a manner that these images are overlapped as double images. This causes the users to have an uncomfortable feeling.

The present invention is made in view of the above problems, and it is an object of the present invention to provide a three dimensional video display apparatus which is possible to improve the usability for viewing by users, in cases where the type of broadcasting is changed over between 2D broadcasting and 3D broadcasting.

### Means for Solving the Problem

In view of the aforementioned problems, it is an object to provide a three dimensional video display apparatus capable of improving the usability for viewing by users, in cases where the type of broadcasting is changed over between 2D broadcasting and 3D broadcasting.

According to a first aspect, there is provided a three dimensional video reproduction apparatus. The three dimensional video reproduction apparatus includes: a video input unit operable to input a signal for displaying a 2D image or a 3D image; a separation unit operable to divide an image indicated by the signal inputted in the video input unit into two images; a difference extraction unit operable to extract a difference or correlation between the two divided images; a determination unit operable to determine whether the signal inputted in the video input unit is a signal for displaying a 3D image or a signal for displaying a 2D image, based on the output of the difference extraction unit; and a 2D/3D changeover unit operable to change over an output mode for outputting an image between a 2D mode for displaying a 2D image and a 3D mode for displaying a 3D image, based on the result of the determination by the determination unit.

Further, according to a second aspect, there is provided a three dimensional video reproduction apparatus. The three dimensional video reproduction apparatus includes: a video input unit operable to input a signal for displaying a 2D image or a 3D image; a determination unit operable to determine whether the signal inputted in the video input unit is a signal for displaying a 2D image or a signal for displaying a 3D image; a display unit operable to display an image; an OSD display unit operable to perform an OSD display on the display unit; a video output unit operable to cause the display unit to display the image indicated by the signal inputted in the video input unit, in a 2D manner or a 3D manner; and a 2D/3D changeover unit operable to change over an output mode in the video output unit between a 2D mode and a 3D mode; wherein the OSD display unit performs an OSD display indicative of inputting of a 2D image on the display unit, when the signal inputted in the video input unit is a signal for displaying a 2D image, and performs an OSD display indicative of inputting of a 3D image, when the signal input in the video input unit is a signal for displaying a 3D image on the display unit.

Further, according to a third aspect, there is provided a three dimensional video display system. The three dimensional video display system includes a three dimensional video display device capable of selectively displaying a 2D image or a 3D image, and glasses for viewing a 3D image displayed on the three dimensional video display device, the glasses comprising: a switch operable to be closed and opened when the glasses are worn and taken off, and a transmission unit operable to transmit information about opening or closing of the switch to the three dimensional video display device, the three dimensional video display device comprising: a 2D/3D changeover unit operable to change over the display between a 2D image and a 3D image, on receiving the information about opening and closing of the switch in the glasses.

Further, according to a fourth aspect, there is provided a three dimensional video reproduction method. The three dimensional video reproduction method includes: inputting a signal for displaying a 2D image or a 3D image; dividing an image indicated by the signal inputted in a video input unit into two divided images,; extracting a difference or a correlation between the two divided images; determining whether the inputted signal is a signal for displaying a 2D image or a signal for displaying a 3D image, based on the result of the extraction of the difference or the correlation; and changing over an output mode for outputting the image between a 2D mode for displaying a 2D image and a 3D mode for displaying a 3D image, based on the result of the determination.

Further, according to a fifth aspect, there is provided a three dimensional video reproduction method. The three dimensional video reproduction method includes: inputting a signal for displaying a 2D image or a 3D image; determining whether the image indicated by the inputted signal is a signal for displaying a 2D image or a signal for displaying a 3D image; and performing an OSD display indicative of inputting of a 2D image on a display unit, when the image indicated by the inputted signal is a signal for displaying a 2D image, and performing, on the display unit, an OSD display indicative of inputting of a 3D image, when the image indicated by the inputted signal is a signal for displaying a 3D image.

Further, according to a sixth aspect, there is provided a semiconductor device for three dimensional video reproduction. The semiconductor device for three dimensional video reproduction includes: a video input unit operable to input a signal for displaying a 2D image or a 3D image is inputted; a separation unit operable to divide an image indicated by the signal inputted in the video input unit into two images; a difference extraction unit operable to extract a difference or correlation between the two divided images; a determination unit operable to determine whether the signal inputted in the video input unit is a signal for displaying a 3D image or a signal for displaying a 2D image, based on the output of the difference extraction unit; and a 2D/3D changeover unit operable to change over an output mode for outputting an image between a 2D mode for displaying a 2D image and a 3D mode for displaying a 3D image, based on the result of the determination by the determination unit.

### Effect of the Invention

According to the aforementioned respective embodiments, it is possible to improve the usability for viewing by users, in cases where the type of broadcasting is changed over between 2D broadcasting and 3D broadcasting.

### Brief Description of Drawings

Fig. 1 is a schematic view of a three dimensional video display system according to an embodiment.
Fig. 2 is a block diagram of a three dimensional video display device according to a first embodiment.
Fig. 3A is a view of the configuration of the three dimensional video display device according to the present embodiment.
Fig. 3B is a view of the configuration of dedicated glasses according to the present embodiment.
Fig. 3C is an enlarged view of a unit around a hinge in the dedicated glasses according to the present embodiment (at a state where temples are folded).
Fig. 3D is an enlarged view of the unit around the hinge in the dedicated glasses according to the present embodiment (at a state where temples are opened).
Fig. 4 is an explanation view illustrating the correspondence between the state of the switch in the dedicated glasses and the changeover of the image output mode, according to the present embodiment.
Fig. 5A is an explanation view of operations for changing over the image output mode in the three dimensional video display device according to the present embodiment.
Fig. 5B is an explanation view of operations for changing over the image output mode in the three dimensional video display device according to the present embodiment (other use case).
Fig. 6A is an explanation view of an image outputting state according to the present embodiment (2D broadcasting).
Fig. 6B is an explanation view of an image outputting state according to the present embodiment (3D broadcasting (without the dedicated glasses)).
Fig. 6C is an explanation view of an image outputting statue according to the present embodiment (3D broadcasting (with the dedicated glasses)).
Fig. 7A is an explanation view of an original image in a 3D broadcast of a side-by-side type.
Fig. 7B is an explanation view of an original image in a 2D broadcast.
Fig. 8 is a block diagram of a three dimensional video display device according to a second embodiment.
Fig. 9 is a block diagram of a three dimensional video display device according to a third embodiment.
Fig. 10 is a block diagram of a three dimensional video display device according to an aspect of another embodiment.
Fig. 11A is an explanation view illustrating the format of an original image in a 3D broadcast of a side-by-side type.
Fig. 11B is an explanation view illustrating the format of an original image in a 3D broadcast of a top-and-bottom type.

### Mode for Carrying Out the Invention

### First Embodiment

### 1. Structure

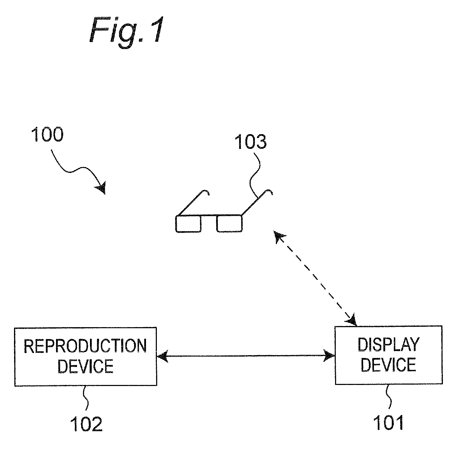

A first embodiment will be described. Fig. 1 is a block diagram of a three dimensional video display system. The three dimensional video display system 100 includes a three dimensional video display device 101, and a dedicated glasses 103 for viewing three dimensional images being displayed on the three dimensional video display device 101. A reproduction device 102 is connected to the three dimensional video display device 101.

The reproduction device 102 is, for example, a tuner or a BD/DVD recorder and is adapted to acquire video signals from recording mediums or through networks or broadcasts and further output the video signals.

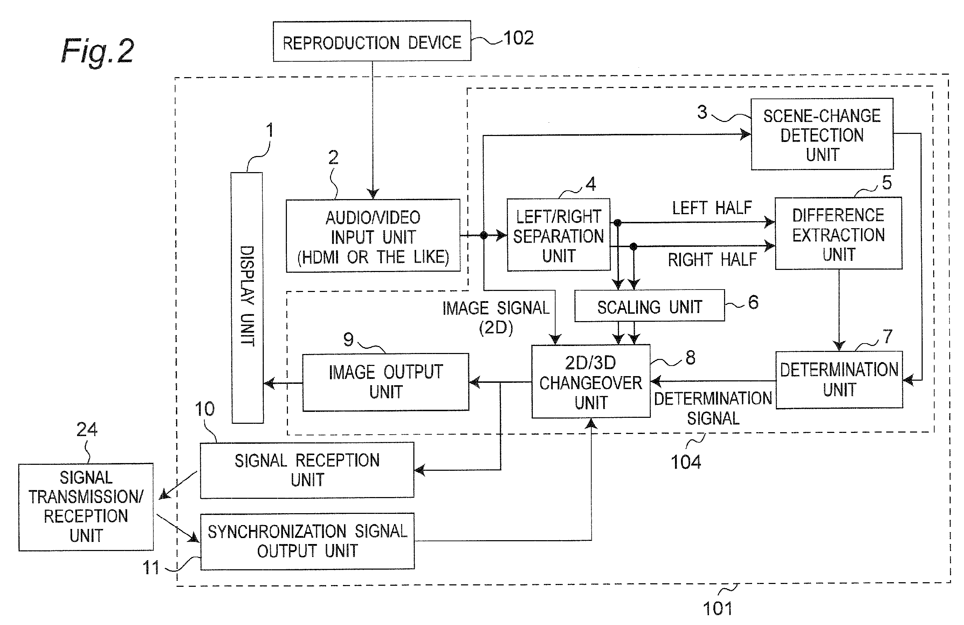

Fig. 2 is a view illustrating a signal processing block in the three dimensional video display device 101. The three dimensional video display device 101 includes a display unit 1, an audio/video input unit 2, a scene-change detection unit 3, a left/right separation unit 4, a difference extraction unit 5, a scaling unit 6, a determination unit 7, a 2D/3D changeover unit 8, a video output unit 9, a synchronization signal output unit 10, and a signal reception unit 11. Further, in the present embodiment, it is assumed that a 2D broadcast signal and a 3D broadcast signal of a side-by-side type are transmitted, as broadcast signals.

The display unit 1 outputs (displays) images. The display unit 1 can be driven by, for example, a plasma display panel system or a liquid crystal display system.

The audio/video input unit 2 is a block which receives output signals from the reproduction device 102. The audio/video input unit 2 inputs video signals, audio signals and the like which are outputted from the reproduction device 102. The audio/video input unit 2 and the reproduction device 102 transmit and receive signals to and from each other, through an HDMI scheme. The version of HDM1 is, for example, Ver 1.4.

The scene-change detection unit 3 inputs video signals and audio signals which are outputted from the audio/video input unit 2 and detects changeover (scene change) points between images (scenes). On detecting a scene change, the scene-change detection unit 3 outputs a scene-change detection signal. As a method for detecting scene changes, there are various types of techniques and, for example, there are known a method for determination by acquiring differences or correlations between frames, out of temporally-continuous plural video frame, and a method for analyzing audio signals for detecting no-sound parts.

The left/right separation unit 4 inputs a video signal which is outputted from the audio/video input unit 2, divides the image indicated by the video signal into two images in the left and right portions and, further, outputs a video signal indicating a left-half image (the left side image) and a video signal indicating a right-half image (the right side image).

The difference extraction unit 5 extracts the differences between the left side image and the right side image based on the video signal outputted from the left/right separation unit 4 and outputs a signal indicating the differences. Further, the difference extraction unit 5 can be adapted to determine the correlations therebetween, instead of the differences.

The scaling unit 6 enlarges, twice, the left side image and the right side image resulted from the division (separation) by the left/right separation unit 4 (it enlarges it with a size of 1920*1080), individually in the left and right sides, and further outputs video signals indicating the enlarged left and right side images.

The determination unit 7 inputs a scene-change point which is outputted from the scene-change detection unit 3 and the difference outputted from the difference extraction unit 5 and, further, determines whether the image being currently outputted are 3D-type image (three-dimensional image (3D image)) or 2D-type image (two-dimensional image (2D image)). More specifically, if the difference between the left side image and the right side image which are outputted from the left/right separation unit 4 is equal to or less than a predetermined value, the determination unit 7 determines that a 3D image is being inputted. If the difference therebetween is larger than the predetermined value, the determination unit 7 determines that a 2D-type image is being inputted. Based on the result of the determination, the determination unit 7 outputs a determination signal indicating whether the image being currently outputted is 3D image or 2D image, to the 2D/3D changeover unit 8.

The 2D/3D changeover unit 8 inputs an output signal from the audio/video input unit 2, an output signal from the scaling unit 6, a determination signal from the determination unit 7 and an output signal from the signal reception unit 11. Further, the 2D/3D changeover unit 8 outputs a video signal to the video output unit 9 in a predetermined image output mode, based on the determination signal from the determination unit 7 and the output signal from the signal reception unit 11. More specifically, the 2D/3D changeover unit 8 outputs a 2D video signal inputted from the audio/video input unit 2, when the determination signal from the determination unit 7 is a signal indicating a 2D-type image. Hereinafter, such an operation mode will be referred to as a "2D mode 1". On the other hand, when the determination signal from the determination unit 7 is a signal indicating a 3D image, the following operations are performed according to the signal received from the signal reception unit 11.

The signal reception unit 11 receives the signal (for example, infrared ray or radio wave) transmitted from the dedicated glasses 103 and, further, informs to the 2D/3D changeover unit 8 of the operation state of the dedicated glasses 103. More specifically, the signal reception unit 11 outputs, thereto, a signal indicative of whether or not the dedicated glasses 103 are being used (which will be described later in detail).

The 2D/3D changeover unit 8 outputs the 3D video signal outputted from the scaling unit 6, when the determination signal from the determination unit 7 indicates a 3D image and, also, the reception signal from the signal reception unit 11 is a signal indicative of the fact that the dedicated glasses 103 are being used. Hereinafter, such an operation mode will be referred to as a "3D mode". In this case, the 2D/3D changeover unit 8 outputs the left-eye image and the right-eye image in a temporally-alternate manner (for example, in such a manner to change over between the left and right sides at 120-Hz intervals), based on the left video signal and the right video signal which are outputted from the scaling unit 6. On the contrary, when the determination signal from the determination unit 7 is a signal indicating a 3D image and, also, the reception signal from the signal reception unit 11 is a signal indicative of the fact that the dedicated glasses 103 are not being used, the 2D/3D changeover unit 8 outputs video signal of the left side image of the 3D image outputted from the scaling unit 6, as a 2D image. Hereinafter, such an operation mode will be referred to as a "2D mode 2".

The video output unit 9 is a display driver which controls the driving of the display unit 1 and outputs the video signal outputted from the 2D/3D changeover unit 8, to the display unit 1.

The synchronization signal output unit 10 detects the changeover between the left-eye image and the right-eye image, based on the video signal outputted from the 2D/3D changeover unit 8, further, for example, converts a synchronization signal into infrared ray or radio wave and further outputs the synchronization signal to the glasses 103.

The scene-change detection unit 3, the left/right separation unit 4, the difference extraction unit 5, the scaling unit 6, the determination unit 7, the 2D/3D changeover unit 8 and the video output unit 9 are formed on a single chip of a semiconductor device 104 (a three-dimensional video reproduction semiconductor device) such as an LSI. Also, they can be formed on plural devices, instead of being formed on a single chip.

Next, there will be described the configuration for transmission and reception between the three-dimensional video display device 101 and the dedicated glasses 103.

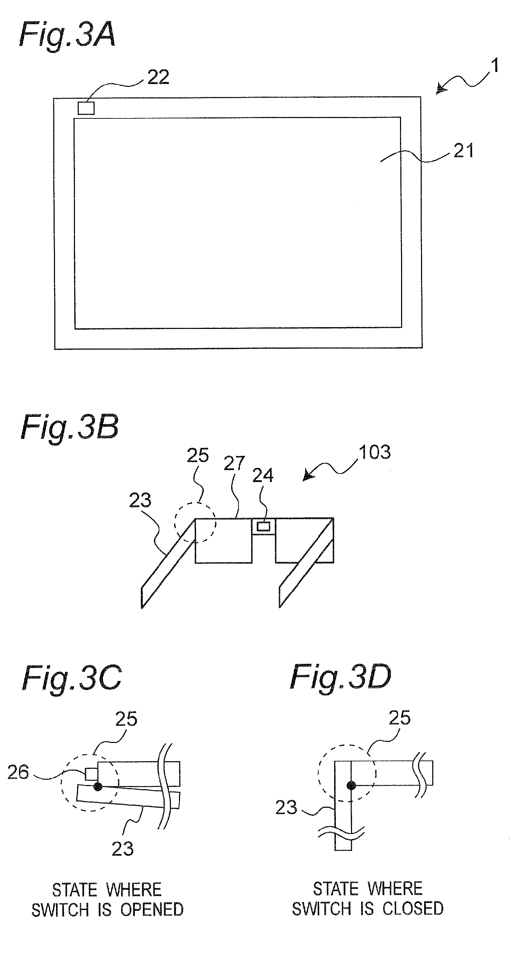

Fig. 3A is a schematic front view of the appearance of the display unit 1. As illustrated in Fig. 3A, there is provided a signal transmission/reception unit 22 on a front-surface of the display unit 1. The signal transmission/reception unit 22 is formed by integrating the two units, namely the synchronization signal output unit 10 and the signal reception unit 11 described with reference to Fig. 2.

Fig. 3B illustrates the configuration of the dedicated glasses 103. The dedicated glasses 103 include a front frame 27, a pair of left and right temples 23, and hinges 25 which support the temples 23 such that they can be folded with respect to the front frame 27. The front frame 27 is provided with a signal transmission/reception unit 24 capable of transmitting and receiving signal to and from the signal transmission/reception unit 22 in the display unit 1.

Fig. 3C and Fig. 3D are enlarged views illustrating the unit around a hinge 25 in the dedicated glasses 103 (the unit of the dedicated glasses 103 which couples the front frame 27 and a temple 23). The hinge 25 is provided with a switch 26 which detects the temple 23 is folded. The switch 26 is opened (off) at a state where the temples 23 in the dedicated glasses are folded as shown in Fig. 3C, and is closed (on) at a state where the temples 23 in the dedicated glasses 103 are substantially orthogonal to the front frame 27 as shown in Fig. 3D. Usually, when a user uses the dedicated glasses 103 (namely, when he or she wears the dedicated glasses 103), the temples 23 are orthogonal to the front frame 27 as shown in Fig. 3D, and when they are not used, the temples 23 are folded as shown in Fig. 3C. Accordingly, when the dedicated glasses 103 are used, the switch 26 is closed (on), and when they are not used, the switch 26 is opened (off).

The dedicated glasses 103 are of a Liquid-crystal-shutter type, for example. When the signal transmission/reception unit 24 receives the synchronization signal from the synchronization signal output unit 10 described with reference to Fig. 1, the left-eye liquid crystal shutter and the right-eye liquid crystal shutter in the dedicated glasses 103 are alternately closed and opened respectively, in synchronization with the synchronization signal. In the dedicated glasses 103 of the present embodiment, for example, the liquid crystal shutters open and close, only at a state where the switch 26 is closed.

### 2. Operations

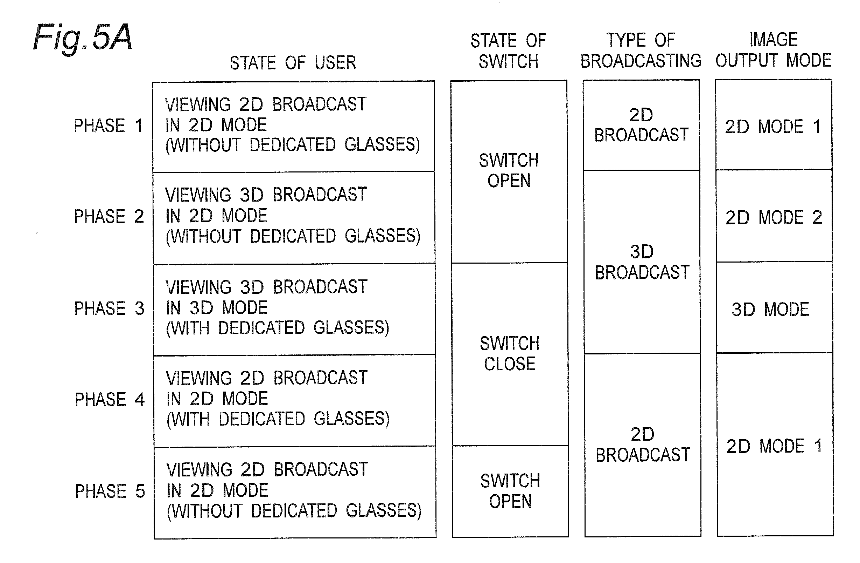

Next, operations of the entire three dimensional video display system 100 will be described. Fig. 5A illustrates the relationship among the state of the user, the state of the switch 26, the type of broadcasting, and the image output mode (the output mode), in cases where the state of the user is shifted among 5 stages (phases 1 to 5).

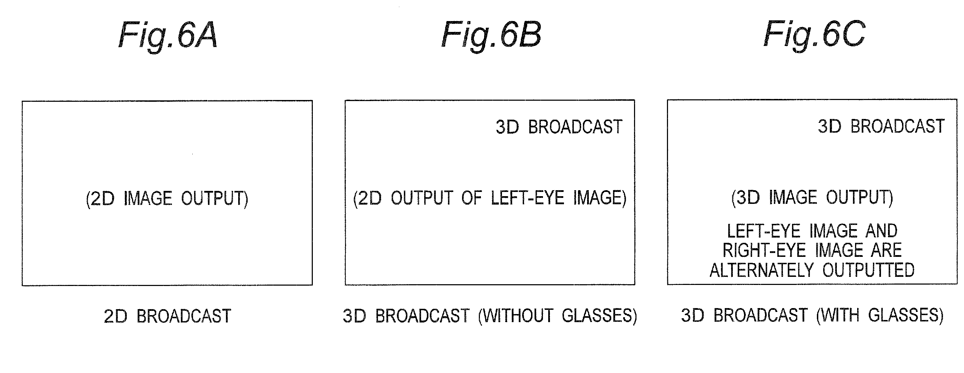

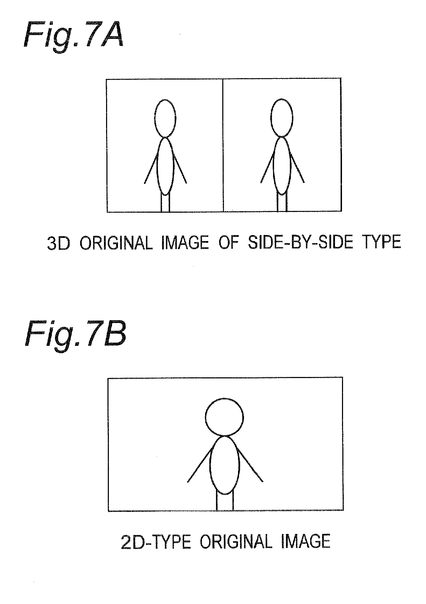

At first, it is assumed that a broadcast of 2D image as illustrated in Fig. 7B is outputted. Further, it is assumed that the 2D/3D changeover unit 8 is in the 2D mode since the audio/video input unit 2 inputs a 2D image thereto, and the video output unit 9 outputs an image to the display unit 1 in the 2D mode 1. It is assumed that the user views the image at a state where he or she does not wear the dedicated glasses 103 (at a state where the switch 26 is opened), at this time. In this case, the image viewed by the user is a 2D image as illustrated in Fig. 6A (the phase 1).

Next, it is assumed that the content of the broadcast is changed to a 3D image of a side-by-side type, as illustrated in Fig. 7A. Then, a 3D image of the side-by-side type illustrated in Fig. 7A is inputted to the audio/video input unit 2. Due to the changeover from a normal 2D image to a side-by-side image, the scene-change detection unit 3 detects a scene change at this changeover point. Further, due to the changeover from a normal 2D image to a 3D image of the side-by-side type, the amount of the difference between the left side image and the right side image abruptly decreases. This is because, in cases of 2D image, generally, there is hardly a correlation between the right side image and the left side image and, thus, there is a large difference therebetween. On the other hand, in cases of 3D image, such as image of a side-by-side type, the right side image and the left side image are image viewed from different view points, and, basically, there is an extremely high correlation therebetween. Namely, the left and right side images of 3D image of a side-by-side type are similar to each other and, therefore, the difference extraction unit 5 outputs a small amount of difference. The determination unit 7 determines that a 3D broadcast is being inputted, based on that the amount of difference from the difference extraction unit 5 is small and based on that the scene-change point is detected by the scene-change detection unit 3. On receiving the result of the determination, the 2D/3D changeover unit 8 outputs only the left side image (the left-eye image), for example, out of the image resulted from the division by the left/right separation unit 4 (it outputs image in a 2D mode 2), to the video output unit 9. This enables the user to view a 2D image as in Fig. 6B, not image of the side-by-side type, while 3D broadcasting is performed (the phase 2).

Further, at this state, the 2D/3D changeover unit 8 outputs a video signal including the left side image with characters indicative of "3D broadcast" superimposed on the left side image, to the video output unit 9. The video output unit 9 causes the display unit 1 to display the left side image and the characters indicative of "3D broadcast" which are superimposed thereon. This enables the user to recognize that the broadcast currently viewed by the user is a 3D broadcast, not a 2D broadcast. If the user does not desire to view the broadcast in the 3D mode by disturbing himself or herself by wearing the dedicated glasses 103, the user can continuously enjoy viewing the image in the 2D mode without the dedicated glasses 103. On the contrary, if the user desires to enjoy viewing the image in the 3D mode by wearing the dedicated glasses 103, the user can wear the dedicated glasses 103.

When the user wears the dedicated glasses 103, the temples 23 in the dedicated glasses 103 are opened to close the switch 26 and, thus, the signal transmission/reception unit 24 in the dedicated glasses 103 transmits a signal indicating the fact that the switch 26 is closed, to the signal reception unit 11 in the three dimensional video display device 101. On receiving the signal indicative of the fact that the switch 26 is closed, the signal reception unit 11 transmits the signal to the 2D/3D changeover unit 8. The 2D/3D changeover unit 8 can detect that the dedicated glasses 103 are being used, based on the signal indicating the fact that the switch 26 is closed. Further, on detecting that the dedicated glasses 103 are being used, the 2D/3D changeover unit 8 outputs a video signal in the 3D mode. This enables the user wearing the dedicated glasses 103 to enjoy a 3D image as illustrated in Fig. 6C (the phase 3).

If the broadcast is changed over to a 2D broadcast, again, in this case, the audio/video input unit 2 outputs 2D image as in Fig. 7B. At this time, the scene-change detection unit 3 detects a scene-change point. Further, the difference extraction unit 5 detects large differences. Accordingly, the determination unit 7 determines that a 2D broadcast is being inputted. Thus, the 2D/3D changeover unit 8 outputs a 2D video signal to the video output unit 9 by changing over the mode to the 2D mode 1. Thus, the display unit 1 is controlled to display a 2D image as shown in Fig. 6A, again (the phase 4).

At the same time, the 2D/3D changeover unit 8 causes the display unit 1 to display indication indicating that "2D broadcasting" is being performed, which is superimposed on the image, through the video output unit 9. This enables the user to recognize the fact that the broadcast being currently viewed has been changed over from 3D to 2D, thereby enabling the user to view the 2D broadcast by taking off the dedicated glasses 103 (the phase 5).

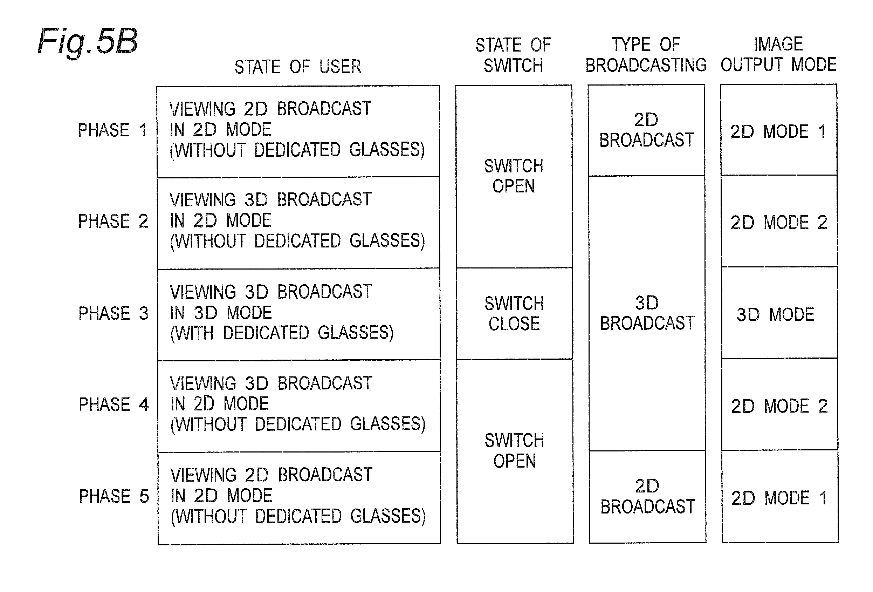

Next, another case of use will be described. Fig. 5B is a view illustrating a case where the phase 4 is different from that in Fig. 5A. The phases 1 to 3 in Fig. 5B are the same as those in Fig. 5A and, therefore, explanation thereof will not be described. In the phase 3 in Fig. 5B, when a 3D broadcast is inputted, and image are outputted in the 3D mode and, also, a user views them by wearing the dedicated glasses 103, the broadcast itself is maintained at a 3D broadcast.

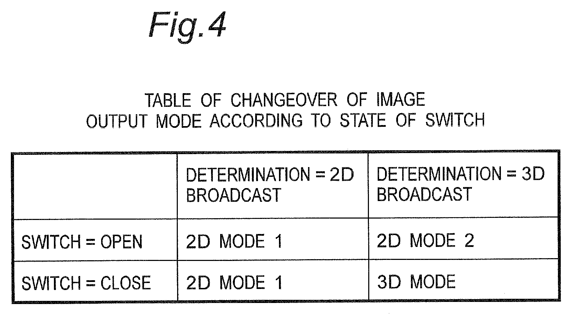

At this state, if the user takes off the dedicated glasses 103 and folds the temples 23, the signal transmission/reception unit 24 in the dedicated glasses 103 transmits a signal indicating the fact that the switch 26 is opened (or no signal). If the signal reception unit 11 in the display 1 receives the signal indicating the fact that the switch 26 is opened, the 2D/3D changeover unit 8 determines that the user is not wearing the dedicated glasses 103, based on this signal, and outputs only the left side image to the video output unit 9 while the 3D broadcast is being inputted. Namely, the 2D/3D changeover unit 8 outputs image in the 2D mode 2 (the phase 4). This enables the user to view the 3D broadcast in the 2D mode, without performing specific manipulations, when the user has taken off the dedicated glasses 103. The phase 5 is the same as that in Fig. 5A explanation thereof and will not be described. Fig. 4 illustrates the relationship between the open/close state of the switch 26 and the video-output mode in the 2D/3D changeover unit 8 with respect to the result of the determination by the determination unit 7.

### 3. Conclusions

As described above, according to the first embodiment, it is possible to improve the usability for viewing by users, when the type of broadcasting is changed over between 2D broadcasting and 3D broadcasting.

Namely, firstly, in cases of a changeover from a 2D broadcast to a 3D broadcast, the determination unit 7 can automatically determine that the changeover to a 3D broadcast has occurred, based on the output from the scene-change detection unit 3 and the output from the difference extraction unit 5. Further, based on the result of the determination by the determination unit 7, the 2D/3D changeover unit 8 changes over the video-output mode for outputting image to the 3D mode. This prevents 3D broadcasts from being presented still in a side-by-side manner as in the prior art, thereby offering the advantage that 3D broadcasts can be presented as 2D image.

Secondly, in cases of a changeover from a 2D broadcast to a 3D broadcast as described with respect to the first effect, when 2D image are automatically outputted, the user is not aware of receiving the 3D broadcast. Therefore, the user may continuously view the 3D broadcast as 2D image without being aware thereof, without wearing the dedicated glasses 103 or without changing over the video-output mode. However, in the present embodiment, 2D image are outputted and, concurrently, an indication indicating "3D broadcasting" is displayed, which enables the user to recognize that the 3D broadcast is being received. This offers the advantage that the user can recognize the fact that the 3D broadcast is being received and can view it in the 3D mode by wearing the dedicated glasses 103.

Thirdly, in cases where a changeover to a 3D broadcast is notified through the display of a screen and, also, the user wears the dedicated glasses 103, as described with respect to the second effect, it is possible to automatically cause a changeover to display in the 3D mode, based on the state of the switch 26 in the dedicated glasses 103. This offers the advantage that it does not need for the user to actively change over the display mode.

Fourth, in cases of a changeover from a 3D broadcast to a 2D broadcast, the determination unit 7 can automatically detect the changeover to the 2D broadcast, based on the output from the scene-change detection unit 3 and the output from the difference extraction unit 5. Further, it is possible to change over the display on the display unit 1 to display in the 2D mode. This prevents image in 2D broadcasting from being outputted still in the 3D mode. This offers the advantage that the user is prevented from viewing image in the 2D broadcasting still in the 3D mode and thus is prevented from having an uncomfortable feeling.

Fifth, in cases where the user takes off the dedicated glasses during viewing a 3D broadcast with wearing the dedicated glasses 103, it is possible to automatically cause a changeover from the display in the 3D mode to display in the 2D mode based on the state of the switch 26 of dedicated glasses 103. This offers the advantage that, if the user takes off the dedicated glasses 103, the user is prevented from viewing image in the 3D mode without wearing the dedicated glasses 103, to have an uncomfortable feeling.

Sixth, until the user wears the dedicated glasses 103, it is possible to output image in the 2D mode, regardless of whether the broadcast is a 2D broadcast or a 3D broadcast. In the prior art, for example, if the broadcast is changed over to a 3D broadcast, the mode is automatically changed over to the 3D mode. At this time, if the user does not wear the dedicated glasses 103, the user may view image in 2D broadcasting in the 3D mode and, thus, may have an uncomfortable feeling. However, in the present embodiment, it is possible to offer the advantage that the aforementioned problem can be avoided.

Seventh, in cases where a changeover to the 2D mode is automatically caused when a changeover from a 3D broadcast to a 2D broadcast occurs as described with respect to the fourth effect, it is possible to display the fact that "2D broadcasting" is performed. This enables the user to recognize that it is able to view the image without problems, even after taking off the dedicated glasses 103. This offers the advantage of prevention of the problem that the user continuously and vainly wears the dedicated glasses, without being aware thereof.

### 4. Differences between the Present Embodiment and the Prior Art

There will be described differences between the aforementioned present embodiment and the prior art, in details. At first, such differences will be described, with respect to the method for determining whether the inputted image is a 2D image or a 3D image. As a prior art, there is a technique disclosed in JP-A-7-336729, for example. This technique utilizes a correlation for attaining the determination, which corresponds to the difference extraction unit 5 in the present embodiment. In the prior art, the determination as to whether the image is a 2D image or a 3D image is performed by utilizing only the difference (or the correlation), which may induce erroneous detections depending on the contents of image. This is because, in cases of a side-by-side type, for example, there is hardly a correlation between the left half units and the right-half units of a 2D image and, therefore, the difference therebetween is decreased, but the left-half part (the left-eye image) and the right-half part (the right-eye image) of original 3D image (image as shown in Fig. 7A) are not completely equal to each other, which may induce a large difference therebetween depending on the image. However, in the present embodiment, there is provided not only the scene-change detection unit 3 but also the difference extraction unit 5, and the determination is performed utilizing the resulted differences obtained from the difference extraction unit 5 at scene-change points, which enables provision of higher detection accuracy, in comparison with the method for determination utilizing only the difference extraction unit 5. Namely, in cases of a changeover from a 2D broadcast to a 3D broadcast or a changeover from a 3D broadcast to a 2D broadcast, a changeover occurs from 2D-type image to side-by-side type image or from side-by-side type image to 2D-type image, and the point of such a changeover necessarily indicates the point of the changeover between scenes. Accordingly, by providing the scene-change detection unit 3 and utilizing it in combination with the difference extraction unit 5, it is possible to prevent erroneous detections.

Next, there will be described the difference of "2D broadcasting" and "3D broadcasting". As the prior art, there are techniques disclosed in JP-B-3273074 and JP-A -7-274216, for example. The methods described in these publications are both adapted to display whether the current display mode in a three-dimensional video display device is a 2D mode or a 3D mode. As a result, even when the broadcasting is 3D broadcasting, in cases where the display mode in the three-dimensional display device is the 2D mode, users may view programs which can be enjoyed in the 3D mode, while these programs are displayed in the 2D mode, without being aware of the fact that these programs are 3D programs. On the contrary, even when the broadcasting is 2D broadcasting, in cases where the display mode in the three-dimensional display device is the 3D mode, users may view programs which can be enjoyed in the 2D mode without dedicated glasses, by wearing the dedicated glasses 103, without being aware of the fact that these programs are such programs.

On the other hand, in the present embodiment, the three dimensional video display device 101 displays whether a mode of image being currently broadcasted (or being reproduced) is of a 2D type or a 3D type mode, rather than displaying the current display mode. Namely, in the present embodiment, in cases where the broadcast is changed over from a 2D broadcast to a 3D broadcast or from a 3D broadcast to a 2D broadcast, the three dimensional display device 101 displays whether the broadcast is a 2D broadcast or a 3D broadcast, regardless of the display mode in the three dimensional display device 101. This prevents the occurrence of inconvenience that occurs in the aforementioned prior art. As a matter of course, it is also possible to cause it to display whether the current display mode is the 2D mode or the 3D mode, in addition to the display as to whether the broadcast being currently inputted is a 2D broadcast or a 3D broadcast.

Further, as a prior art, JP-A-2003-333624 discloses a method for displaying, in a list of programs or a list of recorded videos, whether these programs are 2D broadcasts or 3D broadcasts. However, in the method for displaying with such a list, it is difficult to attain such displaying with a list, in cases where changeovers between 2D broadcasting and 3D broadcasting occur halfway through programs. However, in the present embodiment, it is possible to display whether the broadcasting is 2D broadcasting or 3D broadcasting, at the points of the occurrences of changeovers of the broadcasting. This offers the advantage that the user can make a decision as to whether he or she views them in the 2D mode or the 3D mode and can view them in the way that he or she prefers.

Next, there will be described the difference between the present embodiment and the prior art, with respect to the changeover of the display mode due to the attachment and detachment of the dedicated glasses. As conventional dedicated glasses, JP-U-63-130726 discloses a concept of starting a shutter operation in dedicated glasses when the dedicated glasses are worn and stopping the shutter operation when the dedicated glasses have been taken off.

However, in the present embodiment, when the dedicated glasses 103 are worn, it is possible to automatically change over the display mode in the three dimensional video display device 101 from the 2D mode to the 3D mode, as well as controlling the start of the shutters. Further, when the dedicated glasses 103 are taken off, it is possible to automatically change over the display mode from the 3D mode to the 2D mode, as well as controlling the stop of the shutters. This offers the advantage that the user can view 3D image being displayed in the 3D mode, only when the user wears the dedicated glasses 103 and, also, that the changeover of the display can be automatically performed.

### Second Embodiment

Next, a second embodiment will be described. In the present embodiment, it is assumed that 2D broadcast signal and 3D broadcast signal of a top-and-bottom type are transmitted, as broadcast signal.

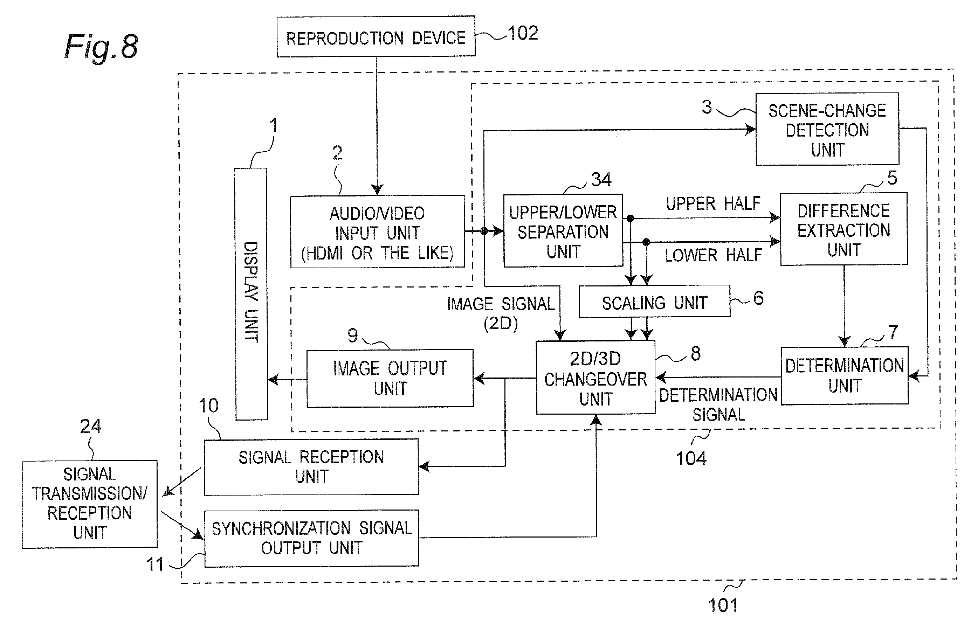

Fig. 8 is a view illustrating a signal processing block in a three dimensional video display device 101 according to the second embodiment. In the second embodiment, there is provided an upper/lower separation unit 34, instead of the left/right separation unit 4 according to the first embodiment.

The upper/lower separation unit 34 inputs a video signal outputted from an audio/video input unit 2, divides the image indicated by the video signal into two image in the upper and lower sides and outputs video signal indicating the upper half image (the upper side image) and video signal indicating the lower half image (the lower side image).

A difference extraction unit 5 extracts difference between the upper side image and the lower side image, based on the video signal outputted from the upper/lower separation unit 34 and outputs signal indicating the difference. The difference extraction unit 5 may extract the correlations therebetween, instead of the difference.

A scaling unit 6 enlarges, twice, the upper side image and the lower side image divided (separated) by the upper/lower separation unit 34 (enlarging them with a size of 1920*1080), individually in the upper and lower sides, and further outputs the video signal indicating the enlarged upper and lower side image individually.

A determination unit 7 receives a scene-change points which is outputted from a scene-change detection unit 3 and difference outputted from the difference extraction unit 5 and, further, determines whether the image being currently outputted is a 3D image or a 2D-type image. More specifically, if the difference between the upper side image and the lower side image which are outputted from the upper/lower separation unit 34 is equal to or less than a predetermined value, the determination unit 7 determines that a 3D image is being inputted, but if the difference therebetween is larger than the predetermined value, the determination unit 7 determines that a 2D-type image is being inputted. Based on the result of the determination, the determination unit 7 outputs a determination signal indicating whether the image being currently outputted is a 3D image or a 2D image, to a 2D/3D changeover unit 8.

The other configurations are the same as those in the first embodiment. Further, regarding operations, the same operations as those in the first embodiment are performed, except the aforementioned contents.

In the second embodiment, it is possible to offer the same effects as those of the first embodiment, in cases where the type of 3D broadcasting is a top-and-bottom type.

### Third Embodiment

Next, a third embodiment will be described. In the present embodiment, it is assumed that a 2D broadcast signal, and a 3D broadcast signal of both a side-by-side type and a top-and-bottom type are transmitted, as broadcasts.

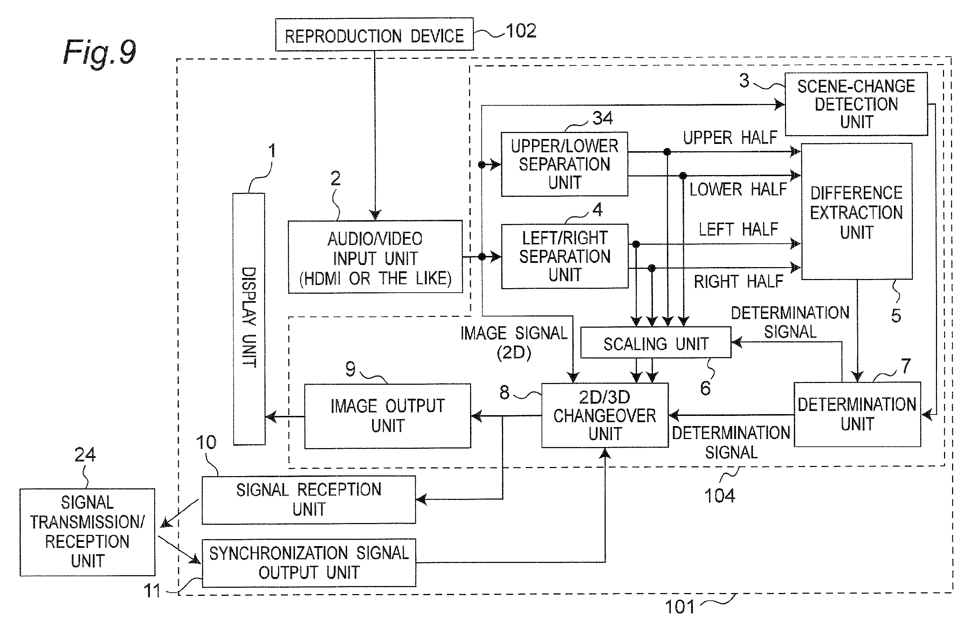

Fig. 9 is a view illustrating a signal processing block in a three dimensional video display device 101 according to the third embodiment.

In the third embodiment, there are provided both the left/right separation unit 4 described in the first embodiment and the upper/lower separation unit 34 described in the second embodiment.

The left/right separation unit 4 inputs a video signal which is outputted from the audio/video input unit 2, divides the image indicated by the video signal into two image in the left and right sides and, further, outputs a video signal indicating the left-half image (the left side image) and a video signal indicating a right-half image (the right side image).

The upper/lower separation unit 34 inputs a video signal outputted from the audio/video input unit 2, divides the image indicated by the video signal into two image in the upper and lower sides and outputs the upper side image in the upper half side (the upper side image) and the lower half image (the lower side image).

A difference extraction unit 5 extracts the difference between the left side image and the right side image based on the video signal outputted from the left/right separation unit 4 and outputs signal indicating the difference. The difference extraction unit 5 extracts difference between the upper side image and the lower side image, based on the video signal outputted from the upper/lower separation unit 34 and outputs a signal indicating the difference. The difference extraction unit 4 may extract the correlation therebetween, instead of the difference.

A determination unit 7 receives a scene-change point which is outputted from the scene-change detection unit 3 and the difference between the left side image and the right side image and the difference between the upper side image and the lower side image which is outputted from the difference extraction unit 5 and, further, determines whether the image being currently outputted is a 3D image of a side-by-side type, a 3D image of a top-and-bottom type or a 2D-type image. More specifically, if the difference between the left side image and the right side image which is outputted from the left/right separation unit 4 are equal to or less than a predetermined value, the determination unit 7 determines that the 3D image of a side-by-side type is being inputted. If the difference between the upper side image and the lower side image which is outputted from the upper/lower separation unit 34 is equal to or less than a predetermined value, the determination unit 7 determines that the 3D image of a top-and-bottom type is being inputted. If both the differences are larger than the predetermined values, the determination unit 7 determines that the 2D-type image are being inputted. Based on the result of the determination, the determination unit 7 outputs a determination signal indicating whether the image being currently outputted is 3D image of a side-by-side type, 3D image of a top-and-bottom type or 2D-type image, to the scaling unit 6 and the 2D/3D changeover unit 8.

A scaling unit 6 inputs video signal indicating the left side image and the right side image divided in the left and right sides by the left/right separation unit 4 and video signal indicating the upper side image and the lower side image divided by the upper/lower separation unit 34. Further, the scaling unit 6 inputs the determination signal from the determination unit 7. Further, when the determination signal from the determination unit 7 is a signal indicating a 3D image of a side-by-side type, the scaling unit 6 enlarges, twice, the left side image and the right side image outputted from the left/right separation unit 4 (enlarging them with a size of 1920*1080), individually in the left and right sides, and further outputs the enlarged left and right side image individually. On the other hand, when the determination signal from the determination unit 7 is a signal indicating a 3D image of a top-and-bottom type, the scaling unit 6 enlarges, twice, the upper side image and the lower side image outputted from the upper/lower separation unit 4 (it enlarges them into image with a size of 1920*1080), individually in the upper and lower sides, and further outputs the enlarged upper and lower side image individually.

The 2D/3D changeover unit 8 inputs an output signal from the audio/video input unit 2, an output signal from the scaling unit 6, determination signal from the determination unit 7 and an output signal from the signal reception unit 11. Further, the 2D/3D changeover unit 8 outputs video signal to the video output unit 9 in a predetermined image output mode, based on the determination signal from the determination unit 7 and the output signal from the signal reception unit 11. More specifically, the 2D/3D changeover unit 8 outputs a 2D video signal inputted from the audio/video input unit 2, when the determination signal from the determination unit 7 is a signal indicating a 2D-type image. On the other hand, the 2D/3D changeover unit 8 outputs a 3D video signal outputted from the scaling unit 6, when the determination signal from the determination unit 7 indicates 3D image of a side-by-side type or a top-and-bottom type and, the reception signal from the signal reception unit 11 are signal indicative of the fact that the dedicated glasses 103 are being used. In this case, the 2D/3D changeover unit 8 outputs a left-eye image and a right-eye image in a temporally-alternate manner (for example, in such a manner to change over between the left and right sides at 120-Hz intervals), based on the left side image (the upper side image) and the right side image (the lower side image) which are outputted from the scaling unit 6. On the contrary, when the determination signal from the determination unit 7 is a signal indicating a 3D image of a side-by-side type or a top-and-bottom type and, the reception signal from the signal reception unit 11 is a signal indicative of the fact that the dedicated glasses 103 are not being used, the 2D/3D changeovers unit 8 outputs a video signal of the left side image (the upper side image), out of the 3D image outputted from the scaling unit 6, as 2D image.

The other configurations are the same as those in the first embodiment. Further, regarding operations, the same operations as those in the first embodiment are performed, except the aforementioned contents.

In the third embodiment, there is provided the advantage that it is possible to cope with cases where both a side-by-side type and a top-and-bottom type are employed as the type of 3D broadcasting and, also, both of them are employed, in addition to the effects described with respect to the first embodiment.

### Fourth Embodiment

Next, a fourth embodiment will be described.

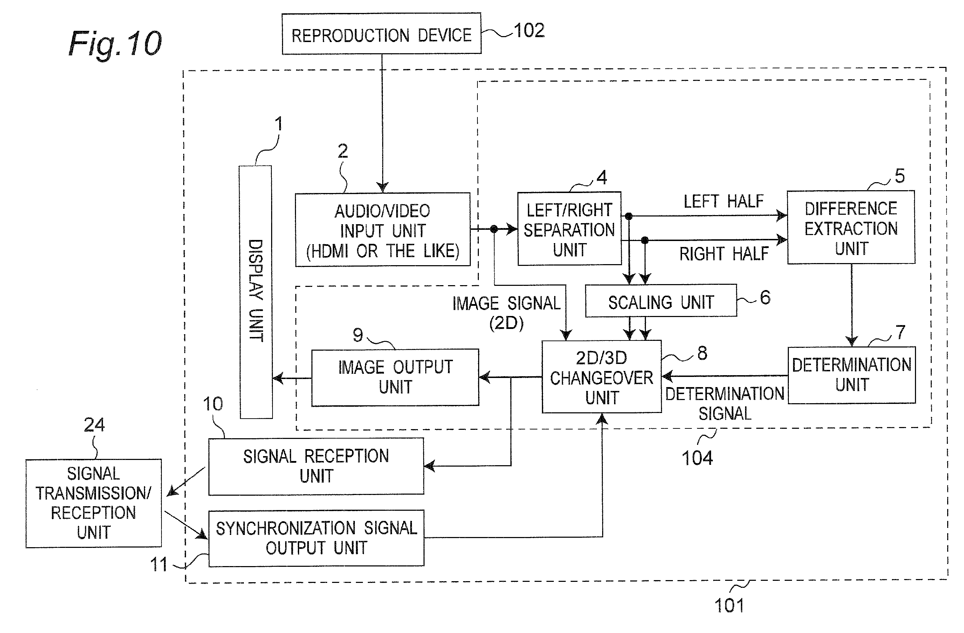

Fig. 10 is a view illustrating a signal processing block in a three dimensional video display device 101 according to the fourth embodiment.

In the fourth embodiment, the scene-change detection unit 3 according to the first embodiment is not provided.

A determination unit 7 inputs the difference outputted from a difference extraction unit 5 and determines whether the image being currently outputted is a 3D image or a 2D-type image. Further, after determining the type of image being inputted, the determination unit 7 outputs a determination signal indicative of the type, namely indicative of whether the image being currently outputted is a 3D image of a side-by-side type or 2D-type image, to a 2D/3D changeover unit 8.

The other configurations are the same as those in the first embodiment. Further, regarding operations, the same operations as those in the first embodiment are performed, except the aforementioned points.

According to the fourth embodiment, it is possible to improve the usability for viewing by the user in cases where the type of broadcasting is changed over between 2D broadcasting and 3D broadcasting, while simplifying the configuration of the three dimensional video display device 101.

Further, the concept of the fourth embodiment can be also applied to cases where the type of 3D broadcasting is a top-and-down type or cases where both a side-by-side type and a top-and-down type are employed as the type of 3D broadcasting.

### Other Embodiments

While, in the aforementioned respective embodiments, the difference extraction unit 5 and the scene-change detection unit 3 are adapted to operate in synchronization with each other, they can be configured as follows. That is, the difference extraction unit 5 can extract a difference or correlation only if the scene-change detection unit 3 detects a scene change, and the determination unit 7 can determine whether the image is a 2D image or a 3D image, based on the difference or the correlation extracted by the difference extraction unit 5, only if the scene-change detection unit 3 detects a scene change. With this configuration, the difference extraction unit 5 and the scene-change detection unit 3 do not operate in synchronization with each other. This can reduce the power consumption in the three dimensional video display device. Namely, it is possible to improve the usability for viewing by the user in cases where the type of broadcasting is changed over between 2D broadcasting and 3D broadcasting, while reducing the power consumption.

While, in the aforementioned respective embodiments, the switch 26 in the dedicated glasses 103 is provided in the unit around the hinge 25, it can be provided in the nose-contact unit of the dedicated glasses 103. For example, it can be provided at the position of a power-supply switch 4 illustrated in Fig. 2 in JP-U-63-130726. Namely, the switch 26 can be provided at any position that it is possible to realize a mechanism which causes the switch 26 to be on when the dedicated glasses are used and, also, causes the switch 26 to be off when they are not used.

While, in the aforementioned respective embodiments, there have been described cases where the scene-change detection unit 3 utilizes a difference or correlation between frames, it is also possible to employ other methods. For example, it is also possible to employ methods for utilizing a point of changeover of PID in MPEG transport stream or detecting a no-sound unit in sound detection. Namely, the point of changeover between 2D broadcasting and 3D broadcasting generally correspond to the point of changeover between audio/videos contents, thereby inducing changeover of PID or instantaneous erasure of sound. This enables detection of scene change utilizing such information.

Further, while, in the aforementioned respective embodiments, the three dimensional video display device 101 is provided with the determination unit 7 and the like to determine whether the image is a 2D image or a 3D image or the like, it is also possible to employ the following configuration. That is, the reproduction device 102 can be provided with a determination unit having the same functions and the like to enable the reproduction device 102 to make the determination and to transmit the result of the determination to the three dimensional video display device 101 through HDMI communication. In the three dimensional video display device 101, the 2D/3D changeover unit 8 receives the result of the determination by the reproduction device 102, through the audio/video input unit 2. Further, the 2D/3D changeover unit 8 changes over between the video-output modes for 2D image and 3D image, based on the result of the determination.

### Industrial Applicability

The present embodiments can be applied to cases where there exist both 2D and 3D image sources, and 2D display and 3D display should be performed for these respective image sources.

### Description of Reference Numerals

- 1: display unit
- 2: audio/video input unit
- 3: scene-change detection unit
- 4: left/right separation unit
- 5: difference extraction unit
- 6: scaling unit
- 7: determination unit
- 8: 2D/3D changeover unit
- 9: video output unit
- 10: synchronization signal output unit
- 11: signal reception unit
- 21: display unit
- 22: signal transmission/reception unit
- 23: temple
- 24: signal transmission/reception unit
- 25: hinge
- 26: switch
- 27: front frame
- 34: upper/lower separation unit
- 100: three dimensional video display system
- 101: three dimensional video display device
- 102: reproduction device
- 103: edicated glasses

## Claims

1. A three dimensional video reproduction apparatus comprising:
a video input unit operable to input a signal for displaying a 2D image or a 3D image;
a separation unit operable to divide an image indicated by the signal inputted in the video input unit into two images;
a difference extraction unit operable to extract a difference or correlation between the two divided images;
a determination unit operable to determine whether the signal inputted in the video input unit is a signal for displaying a 3D image or a signal for displaying a 2D image, based on the output of the difference extraction unit; and
a 2D/3D changeover unit operable to change over an output mode for outputting an image between a 2D mode for displaying a 2D image and a 3D mode for displaying a 3D image, based on the result of the determination by the determination unit.

2. The three dimensional video reproduction apparatus according to Claim 1, further comprising
an audio input unit operable to input an audio signal operable to input an audio signal relating to the image, and
a scene-change detection unit which operable to detect a changeover of an image, based on at least both or one of the video signal inputted in the video input unit and the audio signal inputted in the audio input unit,
wherein the determination unit determines whether the signal inputted in the video input unit is a signal for displaying a 2D image or a signal for displaying a 3D image, based on the output from the scene-change detection unit and the output from the difference extraction unit.

3. The three dimensional video reproduction apparatus according to Claim 2,
wherein the difference extraction unit extracts the difference or the correlation, when the scene-change detection unit detects the changeover of the image, and
the determination unit determines whether the signal inputted in the video input unit is a signal for displaying a 2D image or a signal for displaying a 3D image, based on the difference or the correlation extracted by the difference extraction unit, when the scene-change detection unit detects the changeover of the image.

4. The three dimensional video reproduction apparatus according to Claim 1, further comprising
a display unit operable to display an image,
an OSD display unit operable to perform an OSD display on the display unit,
a video output unit operable to cause the display unit to display an image inputted in the video input unit in a 2D mode or a 3D mode, and
a 2D/3D changeover unit operable to change over the output mode in the video output unit between the 2D mode and the 3D mode,
wherein the OSD display unit performs, on the display unit, an OSD display indicative of inputting of a 2D image, when the signal inputted in the video input unit is a signal for displaying a 2D image, and performs, on the display unit, an OSD display indicative of inputting of a 3D image, when the signal inputted in the video input unit is a signal for displaying a 3D image.

5. A three dimensional video reproduction apparatus comprising:
a video input unit operable to input a signal for displaying a 2D image or a 3D image;
a determination unit operable to determine whether the signal inputted in the video input unit is a signal for displaying a 2D image or a signal for displaying a 3D image;
a display unit operable to display an image;
an OSD display unit operable to perform an OSD display on the display unit;
a video output unit operable to cause the display unit to display the image indicated by the signal inputted in the video input unit, in a 2D manner or a 3D manner; and
a 2D/3D changeover unit operable to change over an output mode in the video output unit between a 2D mode and a 3D mode;
wherein the OSD display unit performs an OSD display indicative of inputting of a 2D image on the display unit, when the signal inputted in the video input unit is a signal for displaying a 2D image, and performs an OSD display indicative of inputting of a 3D image, when the signal input in the video input unit is a signal for displaying a 3D image on the display unit.

6. The three dimensional video reproduction apparatus according to Claim 5, further comprising a conversion unit operable to convert the signal for displaying a 3D image which is inputted from the video input unit into a signal for displaying a 2D image and outputs the converted signal when the output mode by the 2D/3D changeover unit is the 2D mode and, the signal inputted in the video input unit is a signal for displaying a 3D image.

7. A three dimensional video display system comprising a three dimensional video display device capable of selectively displaying a 2D image or a 3D image, and glasses for viewing a 3D image displayed on the three dimensional video display device,
the glasses comprising:
a switch operable to be closed and opened when the glasses are worn and taken off, and
a transmission unit operable to transmit information about opening or closing of the switch to the three dimensional video display device,
the three dimensional video display device comprising:
a 2D/3D changeover unit operable to change over the display between a 2D image and a 3D image, on receiving the information about opening and closing of the switch in the glasses.

8. A three dimensional video reproduction method comprising:
inputting a signal for displaying a 2D image or a 3D image;
dividing an image indicated by the signal inputted in the video input unit into two divided images,;
extracting a difference or a correlation between the two divided images;
determining whether the inputted signal is a signal for displaying a 2D image or a signal for displaying a 3D image, based on the result of the extraction of the difference or the correlation; and
changing over an output mode for outputting the image between a 2D mode for displaying a 2D image and a 3D mode for displaying a 3D image, based on the result of the determination.

9. The three dimensional video reproduction method according to Claim 8, further comprising
detecting a changeover of an image based on the inputted video signal or the inputted audio signal, and
determining whether the inputted signal is a signal for displaying a 2D image or a signal for displaying a 3D image, based on the result of the detection of the image changeover and based on the result of the extraction of the difference or the correlation.

10. The three dimensional video reproduction method according to Claim 8, further comprising
extracting a difference or a correlation, when an image changeover is detected, and
determining whether the inputted signal is a signal for displaying a 2D image or a signal for displaying a 3D image, based on the extracted difference or the extracted correlation, when an image changeover is detected.

11. A three dimensional video reproduction method, comprising:
inputting a signal for displaying a 2D image or a 3D image;
determining whether the image indicated by the inputted signal is a signal for displaying a 2D image or a signal for displaying a 3D image; and
performing an OSD display indicative of inputting of a 2D image on a display unit, when the image indicated by the inputted signal is a signal for displaying a 2D image, and performing, on the display unit, an OSD display indicative of inputting of a 3D image, when the image indicated by the inputted image is a signal for displaying a 3D image.

12. The three dimensional video reproduction method according to Claim 11, further comprising:
converting the image indicated by the inputted signal for displaying a 3D image into a signal for displaying a 2D image, when a mode for outputting an image to the display unit is a 2D mode and, the image indicated by the inputted signal is a signal for displaying a 3D image.

13. A semiconductor device for three dimensional video reproduction, comprising:
a video input unit operable to input a signal for displaying a 2D image or a 3D image is inputted;
a separation unit operable to divide an image indicated by the signal inputted in the video input unit into two images;
a difference extraction unit operable to extract a difference or correlation between the two divided images;
a determination unit operable to determine whether the signal inputted in the video input unit is a signal for displaying a 3D image or a signal for displaying a 2D image, based on the output of the difference extraction unit; and
a 2D/3D changeover unit operable to change over an output mode for outputting an image between a 2D mode for displaying a 2D image and a 3D mode for displaying a 3D image, based on the result of the determination by the determination unit.

14. The semiconductor device for three dimensional video reproduction according to Claim 13, further comprising
a scene-change detection unit operable to detect a predetermined changeover between video signals, based on the video signal inputted in the video input unit or an audio signal inputted in an audio input unit,
wherein the determination unit determines whether the inputted signal is a signal for displaying a 2D image or a signal for displaying a 3D image, based on the output from the scene-change detection unit and the output of the difference extraction unit.

15. The semiconductor device for three dimensional video reproduction according to Claim 13,
wherein the difference extraction unit extracts the difference or the correlation, when the scene-change detection unit detects the image changeover of the image, and
the determination unit determines whether the inputted signal is a signal for displaying a 2D image or a signal for displaying a 3D image, based on the difference or the correlation extracted by the difference extraction unit, when the scene-change detection unit detects the changeover of the image.
